# EUROPÄISCHE PATENTANMELDUNG

(11) **EP 0 942 611 A2**
(43) Veröffentlichungstag der Anmeldung: **15.09.1999**
(21) Anmeldenummer: 99104893.5
(22) Anmeldetag: 11.03.1999
(51) Int. Cl.: H04Q 1/14

(54) **Kontaktbauteil für einen Verteiler in einer Telekommunikationsanlage**

(30) Priorität: 13.03.1998 DE 19811001
(71) Anmelder: RXS Kabelgarnituren Gesellschaft mit beschränkter Haftung, 58093 Hagen (DE)
(72) Erfinder: Beutner, Ralf, 67146 Deidesheim (DE); Nath, Torsten, 10367 Berlin (DE); Maier, Gerhard, 67346 Speyer (DE)
(74) Vertreter: Epping, Wilhelm, Dr.-Ing.

(57) **Zusammenfassung**

Ein erstes Kontaktteil (1) liegt auf einer ersten Stützfläche (9) eines Gehäuseteiles (3) auf und ist mit einem schlitzartigen Freischnitt (5) versehen, durch den eine Stützzunge (6) eines zweiten Kontaktteiles (2) hindurchragt. Dieses ist auf der dem Gehäuseteil (3) abgewandten Seite des ersten Kontaktteiles (1) angeordnet. Die Stützzunge (6) ist am ersten Kontaktbauteil (1) vorbei zu einer gegenüberliegenden zweiten Stützfläche des Gehäuseteiles 3 geführt und dort abgestützt.

Dies ermöglicht eine schlanke Bauweise des Kontaktbauteils.

## Beschreibung

Die Erfindung bezieht sich auf ein Kontaktbauteil für einen Verteiler in einer Telekommunikationsanlage, wobei das Kontaktbauteil mit zumindest zwei aus Flachmaterial gebildeten Kontaktteilen versehen ist, die flachseitig gegeneinander verspannte Kontaktstellen aufweisen. Und die in deren Nähe an Stützflächen eines Kontaktgehäuses des Kontaktbauteiles abgestützt sind.

Ein derartiges Kontaktbauteil ist z.B. durch die Deutsche Patentschrift 1.953.218.4 bekannt geworden. Danach sind die beiden Kontaktteile zwischen zwei Gehäuseteilen des Kontaktbauteiles angeordnet und mit hoher Kontaktkraft gegeneinander verspannt. Die zu beiden Seiten der Kontaktteile angeordneten Gehäuseteile müssen stark genug sein, um die hohen Kontaktkräfte auffangen zu können, was mit entsprechendem Material- und Raumaufwand verbunden ist.

Der Erfindung liegt die Aufgabe zugrunde, bei hoher Klemmkraft die Bauhöhe des Kontaktbauteiles zu verringern. Diese Aufgabe wird durch die Erfindung gemäß Anspruch 1 gelöst.

Beide Kontaktteile liegen nun zu beiden Seiten ein und desselben massiven Gehäuseteils an, wobei die Stützkräfte unmittelbar in dieses eingeleitet und auf kurzem Wege zur Gegenseite weitergeleitet werden. Da das zweite Gehäuseteil zur Aufnahme von Stützkräften entfällt, verringert sich die Gesamtdicke der Anordnung. Durch den schlitzartigen Freischnitt im ersten Kontaktteil nach Anspruch 2 kann die Stützzunge in der Kontaktmitte angeordnet werden, so daß sich die Kontaktkräfte gleichmäßig auf die Kontaktstellen verteilen.

Durch die schlitzartige Freimachung nach Anspruch 3 kann die Stützzunge auf kurzem Wege zur gegenüberliegenden Seite des Gehäuseteils geführt werden. Es ergeben sich kurze Federlängen, die eine entsprechend hohe Klemmkraft ermöglichen.

In Folgenden wird die Erfindung anhand eines in der Zeichnung dargestellten Ausführungsbeispieles näher erläutert.
- Figur 1: zeigt einen partiellen Längsschnitt durch ein Kontaktbauteil nach der Erfindung mit Kontaktteilen,
- Figur 2: einen Schnitt entlang der Linie II-II in Figur 1,
- Figur 3: eine Draufsicht auf die Kontaktteile nach Figur 1.

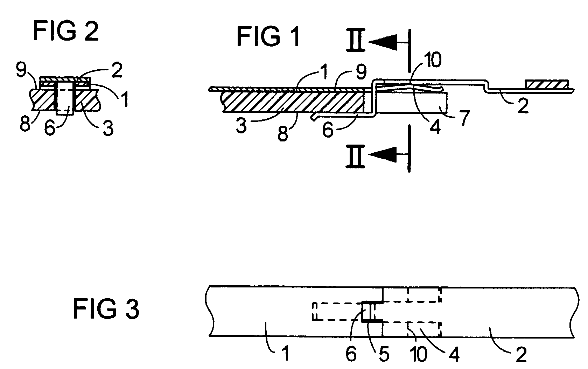

Nach den Figuren 1 bis 3 weist ein Kontaktbauteil zwei sich in ihrer Längsrichtung überlappende Kontaktteile 1,2 auf, die im Überlappungsbereich derart gegeneinander verspannt sind, daß eine sichere permanente Kontaktbindung entsteht, die eine einfache Montage des Kontaktbauteiles begünstigt.

Ein erstes der Kontaktteile 1 liegt auf einer ersten Stützfläche 9 eines flachen Gehäuseteil 3 auf, und ist an seinem freien Ende mit einer sickenartigen Ausbiegung 4 versehen, die von dem zweiten Kontaktteil 2 überlappt wird. Dieses Kontaktteil 2 erstreckt sich annähernd in der Verlängerung des ersten Kontaktteils 1. Wechselseitige Kontaktstellen (10) der Kontaktteile 1, 2 befinden sich im Bereich der höchsten Stelle der Ausbiegung 4.

Das erste Kontaktbauteil 1 weist an seinem freien Ende einen mittleren schlitzartigen Freischnitt 5 auf. Das zweite Kontaktteil 2 ist mit einer stirnseitig abstehenden Stützzunge 6 versehen. Das zweite Kontaktteil 2 ist im Bereich der Kontaktstellen auf der dem Gehäuseteil 3 abgewandten Seite des ersten Kontaktteils 1 angeordnet. Die mittlere Stützzunge 6 ist vom Überlappungsbereich aus rechtwinklig zum Gehäuseteil 1 hin abgewogen und dabei durch den schlitzartigen Freischnitt des Kontaktteils 1 hindurchgeführt. Das Gehäuseteil 3 weist eine entsprechend breite schlitzartige Freimachung 7 für den Stützsteg 6 auf.

Auf der gegenüberliegenden Seite ist die Stützzunge 6 in einem weiteren rechten Winkel derart umgebogen, daß sie sich an eine dem Kontaktteil 1 gegenüberliegende zweite Stützfläche 8 des Gehäuseteils 3 unter Vorspannung anlegt. Damit werden die Federkräfte unmittelbar auf ein und das selbe Gehäuseteil gelenkt, das die Federkräfte in kurzem Kraftschluß aufnimmt. Dadurch kann das Kontaktbauteil bei hoher Kontaktkraft entsprechend schmal ausgebildet werden.

## Patentansprüche

1. Kontaktbauteil für einen Verteiler in einer Telekommunikationsanlage,
wobei das Kontaktbauteil mit zumindest zwei aus Fachmaterial gebildeten Kontaktteilen (1,2) versehen ist, die flachseitig gegeneinander verspannte Kontaktstellen (10) aufweisen und die in deren Nähe ans Stützflächen (8,9) eines Gehäuses des Kontaktbauteiles abgestützt sind,
**dadurch gekennzeichnet,**
daß die Stützflächen (8,9) zu beiden Seiten eines Gehäuseteiles (3) des Kontaktbauteiles ausgebildet sind,
daß ein erstes der Kontaktteile (1) an einer ersten (9) der Stützflächen abgestützt ist,
daß die Kontaktstellen (10) auf der der ersten Stützfläche (9) abgewandten Seite des ersten Kontaktteiles (1) angeordnet sind, und
daß das zweite Kontaktteil (2) eine Stützzunge (6) aufweist, die aus der Ebene dieses Kontaktteiles (2) herausgebogen ist und die am ersten Kontaktteil (1) vorbei zur gegenüberliegenden zweiten Stützfläche (8) des Gehäuseteiles (3) führt und an dieser abgestützt ist.

2. Kontaktbauteil nach Anspruch 1,
**dadurch gekennzeichnet,**
daß das erste Kontaktteil (1) einen schlitzartigen Freischnitt (5) aufweist, durch die die Stützzunge (6) hindurch zur zweiten Stützfläche (8) geführt ist.

3. Kontaktbauteil nach Anspruch 1 oder 2,
**dadurch gekennzeichnet,**
daß das Gehäuseteil (3) eine schlitzartige Freimachung (7) aufweist, durch die die Stützzunge (6) zur gegenüberliegenden zweiten Stützfläche (8) hindurch ragt.
